# EUROPEAN PATENT SPECIFICATION

(11) **EP 2 239 835 B1**
(45) Date of publication and mention of the grant of the patent: **07.09.2011**
(21) Application number: 10158255.9
(22) Date of filing: 29.03.2010
(51) Int. Cl.: H02M 3/335

(54) **Converter device and corresponding method**
Wandlungsvorrichtung und entsprechendes Wandlungsverfahren
Dispositif de conversion et procédé de conversion correspondant

(30) Priority: 07.04.2009 IT TO20090267
(43) Date of publication of application: 13.10.2010
(73) Proprietor: Osram Gesellschaft mit beschränkter Haftung, 81543 München (DE); OSRAM S.P.A. - SOCIETA' RIUNITE OSRAM EDISON CLERICI, 20144 Milano (IT)
(72) Inventor: Cecconello, Nico, 35020 Ponte S. Nicolò (Padova) (IT); De Anna, Paolo, 31039 Riese Pio X (Treviso) (IT)
(74) Representative: Bosotti, Luciano

(56) References cited:
- US-A1- 2002 001 203

## Description

### Field of the invention

The present disclosure relates to techniques of d.c./d.c. conversion.

The disclosure has been developed with particular attention paid to its possible use in units for driving LEDs used as light sources. A possible application of the present disclosure is driving of medium-power LEDs with insulation barrier with a d.c. input and an output at constant voltage or current.

### Description of the relevant art

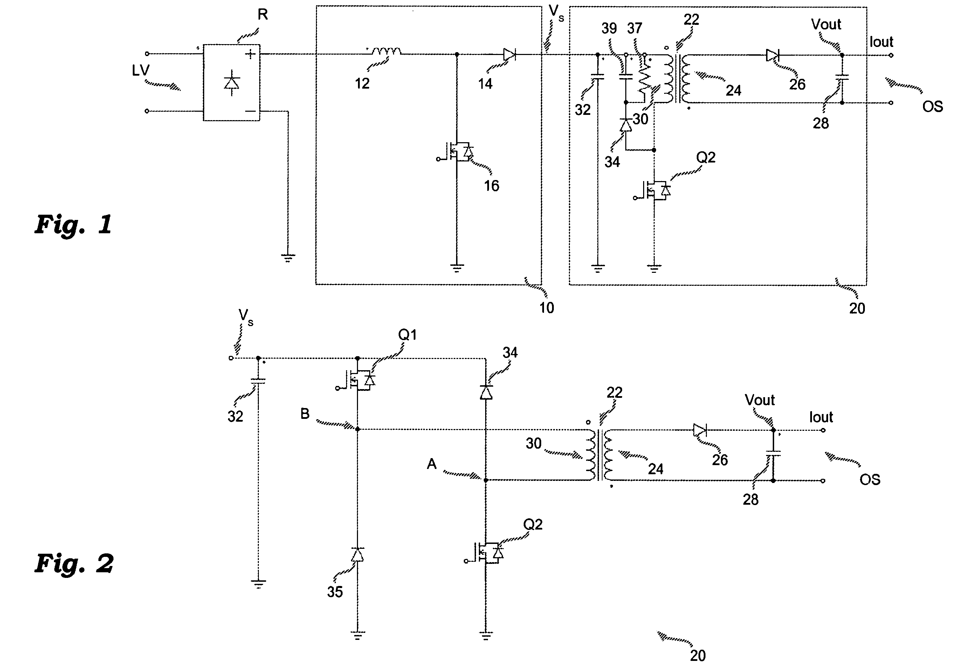

Figure 1 illustrates an electrical scheme in which a line voltage LV (for example the normal grid voltage at 50 Hz) is converted into an output current/voltage OS that can be used for driving a load, constituted, for example, by a light source such as a LED module.

In the example illustrated here by way of reference, after traversing a rectifier R, the line voltage LV passes through two stages 10 and 20 so that a stabilized output signal OS is supplied at output from the stage 20 itself.

The stage 10 has basically a function of active power-factor control (PFC) and produces at its output a stabilized voltage Vs of the order of 400 Vdc with a ripple at 100 Hz superimposed thereon (i.e., at a frequency that is twice the grid frequency), whilst absorbing a sinusoidal current in phase with the grid voltage.

In the example of Figure 1, the stage 10 includes an inductor 12 with a diode 14 cascaded thereto. An electronic switch such as a MOSFET 16 is set between the inductor 12 and the diode 14 according to a general T configuration.

This structure is here recalled purely by way of illustration: persons skilled in the art know in fact that the same signal (i.e., the voltage Vs) can be obtained with different techniques.

With reference now to the stage 20, in the example illustrated said stage 20 is basically configured as a d.c.-d.c. stage of a fly-back type, which generates, starting from the voltage Vs, the stabilized output signal OS, i.e., the voltage Vout and/or the current Iout.

In the example represented here, the stage 20 includes a transformer (i.e., a mutual inductor) 22, the secondary winding 24 of which supplies, through a diode 26, the charge of an output capacitor 28 across which the stabilized output voltage Vout is present. The primary winding 30 of the transformer 22 is driven via an electronic switch Q2 (typically constituted by a MOSFET) according to the scheme known as quasi-resonant (QR) mode.

In the scheme of Figure 1, the reference number 32 designates an input capacitor of the stage 20, across which the voltage Vs is present. Then connected through the primary winding 30 of the transformer 22 is an RCD snubber, i.e., a diode 34, the anode of which comes under the switch Q2 and the cathode of which is connected to an RC group constituted by the parallel of a resistor 37 and a capacitor 39.

The topology represented in Figure 1 is to be deemed in itself known to the art.

Likewise known is the corresponding operating principle: basically, the switch Q2 is on (i.e., rendered conductive) for voltages lower than the voltage Vs (referred to also as "bus" voltage) reducing the switching-on leakages accordingly. The quasi-resonant (QR) driving strategy gives rise to a variable-frequency system that reduces emission of electromagnetic interference (EMI). The RMS values of the currents in the circuit are lower than those that arise in the case where the driving strategy known as "discontinuous conduction mode" (DCM) is adopted.

The scheme illustrated in Figure 1 is as a whole very versatile in so far as it enables "coverage" of rather wide voltage and current ranges both at input and at output.

The inventors have noted that the scheme of Figure 1 suffers from certain intrinsic limitations.

In the first place, the switch Q2 is exposed to a very high voltage, substantially given by the sum of the value of the bus voltage Vs plus n times the output voltage, where n is the transformation ratio (turns ratio) of the mutual inductor or transformer 22.

To obtain a good switching when this operating mode is adopted, the aforesaid ratio, i.e., the number n, is chosen in such a way that the product n·Vout is as close as possible to the value of the bus voltage Vs. Consequently, considering the value of approximately 400 Vdc indicated previously, the voltage across the switch Q2 can reach values of the order of 800 V. This imposes use of a component capable of withstanding a voltage of 900-1000 V, i.e., a rather costly component.

The system is likewise somewhat sensitive to possible overvoltages present on the bus voltage.

Moreover, the reduction of the electromagnetic interference (EMI) cannot be contained beyond a certain limit since there is not an effective zero-voltage switching (ZVS).

Again, there is in any case a power leakage on the mutual inductor due to the presence of the RCD dissipative snubber constituted by the elements 34, 36 and 38 introduced previously.

The inventors have likewise noted that the limitations outlined above can be overcome by resorting to the scheme of the stage 20 represented in Figure 2, where parts, elements, and components identical or equivalent to the ones already described with reference to Figure 1 have been designated by the same reference numbers.

In the scheme of Figure 2, the primary winding 30 of the mutual inductor 22 is driven via a sort of bridge configuration that includes two branches both of which come under (according to a general connection in parallel) the bus line Vs, i.e.:
- a branch including the diode 34, connected with its cathode directly to the bus line Vs (in practice with the elimination of the RC components 37 and 39 of the snubber of the circuit of Figure 1) and with the switch Q2 connected in series to the diode 34; and
- a second branch including a second electronic switch Q1, which is substantially similar to the switch Q2 (for example, once again a MOSFET) and is connected to the line Vs, and a diode 35, which is set between the switch Q1 and ground.

The two terminals of the primary winding 30 of the mutual inductor 22 are in fact connected, respectively, to the intermediate point A between the switch Q1 and the cathode of the diode 36 and, respectively, the intermediate point B between the anode of the diode 34 and the switch Q2.

This scheme is basically a fly-back converter with two switches (constituted by Q2 and Q3), wherein the voltage across Q2 and Q3 is always less than or equal to the bus voltage Vs.

It is possible to choose the turns ratio of the mutual inductor 22 in such a way as to obtain a switching to the on condition at a very low voltage.

In addition, the energy stored in the dispersed inductance of the inductor 22 is recovered in the bus through the diodes 34 and 36.

The inventors have noted that this solution is not free from drawbacks either.

For example, the switch Q1 is floating and, in particular in the embodiment as MOSFET, it also requires a floating supply in order to be able to drive the gate electrode.

For generating said floating voltage it is not possible to resort to a bootstrap technique in so far as the source of the switch Q1 does not necessarily go to zero during the switching period.

Once again it is not possible to achieve an effective condition of zero-voltage switching (ZVS).

More specifically, the invention relates to a converter circuit according to the preamble of claim 1, which is known, e.g. from US 2002/001203 A1, wherein four electronic switches are disclosed operating in a full-bridge-based configuration.

### Object and summary of the invention

The object of the invention is to provide an alternative solution capable of overcoming the drawbacks of the solutions illustrated previously.

According to the present invention, said purpose is achieved thanks to a converter device having the characteristics recited in claim 1. The invention also regards a corresponding method as recited in claim 10.

The claims form an integral part of the disclosure provided herein in relation to the invention.

### Brief description of the annexed representations

The invention will be now described, purely by way of non-limiting example, with reference to the annexed representations, wherein:
- Figures 1 and 2 have already been described previously;
- Figure 3 is a circuit diagram of a converter as described herein; and
- Figure 4 reproduces various diagrams representing the plots of some signals in a converter as described herein.

### Detailed description of embodiments

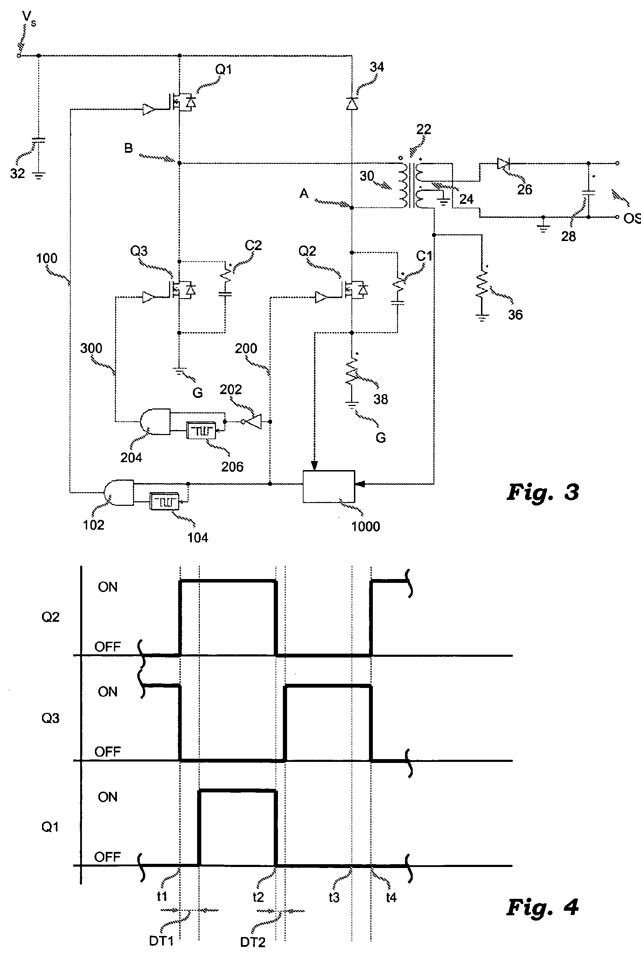

Once again, in the scheme of Figure 3, component parts or elements that are identical or equivalent to parts, elements, or components already described with reference to Figure 1 or Figure 2 are designated by the same reference numbers and will not be described again here for simplicity of illustration.

Basically, as compared with the scheme of Figure 2, the solution of Figure 3 envisages replacing with a further switch Q3 the diode 35 connected in series to the switch Q1. In addition, for reasons that will emerge more clearly from what follows, in the scheme of Figure 3 also two capacitances C1 and C2 associated to the two switches Q2 and Q3 have been illustrated.

The capacitances C1 and C2 can be constituted (at least in part) by the parasitic capacitances of the two switches Q2 and Q3, or else be capacitances added to the circuit. In one embodiment, in order to facilitate zero-voltage switchings (ZVS), C1 > C2 and for satisfying this condition the use of an external capacitance C1 may be required.

The scheme of Figure 3 uses the further switch Q3 for generating a floating supply for the switch Q1, likewise enabling use of a zero-voltage switching (ZVS) for all three switches Q1, Q2, and Q3.

The solution represented in Figure 3 enables use as switch Q3 of a MOSFET of smaller dimensions than the two MOSFETs that constitute the two first switches (main switches) Q1 and Q2. The switch Q3 has in fact the main function of recirculating the leakage energy and a reduced amount of reverse magnetizing current so as to enable zero-voltage switching.

The reference numbers 100, 200 and 300 designate the lines for driving, respectively, the switch Q1, the switch Q2, and the switch Q3. Said lines come under a control or command circuit or unit (for example a microcontroller) 1000.

In the embodiment illustrated, the unit 1000 is rendered likewise sensitive to:
- the voltage across the mutual inductor or transformer 22, detected for example via an auxiliary winding present on the secondary of the transformer 22 in order to determine the instant of demagnetization of the inductor 22 itself; and
- the current in the switch Q2, detected, for example, via an amperometric resistor 38 connected between the source of Q2 and ground.

To simplify illustration of the criteria of operation of the circuit represented in Figure 3, it is here assumed that:
- the line 200 is directly connected to the control unit 1000 so as to receive directly the driving pulses issued by said unit;
- present in the line 100, between the unit 1000 and the gate of the switch Q1, is a system for generation of a delay in switching-on for Q1; in the example of Figure 3, said delay has been obtained by means of an AND gate 102 with two inputs and a delay block 104 (which introduces, for example, a delay of 1 µs, and is connected to one of the two inputs of the AND gate in such a way that the signal introduced on the line 100 reaches the two inputs directly and with the delay set by the element 104, the overall result being that the driving pulses (positive) issued by the unit 1000 will be applied to the gate of the switch Q1 with a corresponding delay with respect to the pulses for driving the gate of the switch Q2: it will be noted that the delay is thus generated only on the rising edge and not on the falling edge); and
- present in the line 300 that performs the function of driving of the gate of the switch Q3 is a logic inverter 202 (which is such as to cause the "high" logic level generated by the unit 1000 to become a "low" logic level, and vice versa), as well as a layout substantially similar to the one seen previously, including an AND gate 204 and a delay element 206, i.e., with a switching-on delay of the switch Q3 (also here the delay is only when switching on and not when switching off); said delay can have, for example, a value of 0.5 µs, hence less than, and preferentially equal to half, the delay value set by the line 106.

Persons skilled in the art will, on the other hand, appreciate that the driving scheme represented here corresponds to a solution that can be illustrated easily.

In general, the solutions for driving the switches Q1, Q2 and Q3 may be obtained either applying an analog approach (using normal PWM driving circuits) or applying a digital approach (using microprocessors or else DSP circuits).

For example, the function for driving the gate of the switch Q2 can be performed via a PWM current-mode-controller circuit NCP 1207 manufactured by ON Semiconductor.

Such a circuit is also capable of performing the functions of detection of the state of demagnetization of the mutual inductor 22 (via the auxiliary winding) and of the current on the switch Q2 described previously. In particular, this can occur via the PIN 1 (ZV sense) connected to the resistor 36 and the PIN 3 (Current sense) connected to the resistor 38.

The signal for driving the switch Q2 thus generated by the circuit NCP 1207 (through the pin 5 - gate driver) can be brought to the input IN (pin 1) of a circuit such as, for example, the integrated circuit L6384 manufactured by STMicroelectronics to obtain then on the respective outputs HVG (pin 7) and LVG (pin 5) the signals for driving the switch Q1 and the switch Q3.

In the case of the example illustrated in Figure 3, the driving sequence of the circuit set via the unit 1000 is the one illustrated in the three diagrams of Figure 4 designated respectively by Q2, Q3, and Q1. Said diagrams refer to a common time scale; in each diagram the "high" level (ON) indicates that the switch is on or active, i.e., conductive; the "low" level (OFF) indicates, instead, that the switch is off or inactive, i.e., non-conductive.

At time t1 the switch Q2 is rendered conductive, i.e., turned on, at zero voltage (ZVS), and the switch Q3 is turned off, i.e., rendered non-conductive. On account of the presence of the inverter 202, the "high" pulse that sends the switch Q2 into conduction assumes, in fact, a low level at output from the inverter 202, which propagates immediately through the AND gate, thus turning off the switch Q3.

The effect of turning-on of the switch Q2 and turning-off of the switch Q3 causes the magnetizing current of the mutual inductor 22 to charge the capacitance C2 across the switch Q3 at the bus voltage Vs.

The output pulse of the unit 1000 that has produced activation of the switch Q2 and turning-off of the switch Q3 propagates, with a delay DT1 established by the delay element 104, at output from the AND gate 102 and reaches the switch Q1, thus switching it on (at zero voltage).

The magnetizing current on the flyback mutual inductor hence starts to increase according to a ramp.

When (in the example considered, thanks to the signal supplied by the resistor 38) the unit 1000 detects that the current of the transformer 22 has reached a pre-determined peak value, the unit 1000 itself governs - at the instant t2 of Figure 4 - turning-off (i.e., passage into conditions of not-conduction) both of the switch Q1 and of the switch Q2.

Once again, it will be appreciated that the turning-off command ("low" logic level) propagates without delays at output from the AND logic gate 102 and hence as far as the switch Q1.

In these conditions, the leakage energy of the transformer is recovered at the bus during a pre-set time interval DTleak (which for simplicity of illustration may be assumed equal to the interval DT2 of Figure 3: in actual fact, the relation DT2 = Dtleak usually applies).

The zero level or "low" level of the output signal of the unit 1000 that determines turning-off of the switches Q1 and Q2 becomes, at output from the logic inverter 202, a signal of "high" logic level, which propagates, with a delay DT2 set by the delay line 206, at output from the AND logic gate 204, determining switching-on (also here at zero voltage) of the switch Q3.

The magnetization energy is consequently transferred to the load on the secondary of the mutual inductor 22.

At a subsequent instant t3, the flyback inductor is found to be demagnetized, and the magnetization inductance of the flyback inductor resonates with the capacitances C1 and C2 (it will be recalled once again that C1 and C2 are not necessarily parasitic capacitances but can be capacitances added to the circuit), causing the voltage across the switch Q2 to go to zero with an oscillation, with the magnetizing current that changes sign.

At the next instant t4, the unit detects - via the auxiliary winding of the inductor 22 - that the voltage across Q2 has dropped to zero.

At this point, the sequence repeats as described previously starting from instant t1, i.e., with the switch Q2 that is again switched on at zero voltage, whilst the switch Q3 is simultaneously de-activated.

Without prejudice to the principle of the invention, the details of construction and the embodiments may vary, even significantly, with respect to what has been illustrated purely by way of non-limiting example herein, without thereby departing from the scope of the invention, as defined by the annexed claims. For example, the mode of connection of the intermediate points A and B of the bridge structure that includes the electronic switches Q2, Q1 and Q3 can be reversed with respect to the one illustrated herein. Likewise, the switch in question, here provided in the form of n-channel MOSFET could be provided with electronic switches of different nature, for example, with p-channel MOSFETs, adapting accordingly the polarities of the driving signals of the components involved.

Moreover, the foregoing description regards for simplicity of illustration an example of embodiment in which the switches Q1 and Q2 are de-activated simultaneously (at the instant t2 of the diagram of Figure 4) so that the energy for obtaining zero-voltage switching (ZVS) of the switch Q3 is the leakage energy alone. In various embodiments, it is possible to envisage that turning-off of Q1 will precede, at least slightly, that of Q2 (i.e., that turning-off of Q2 follows turning-off of Q1) so that the magnetizing current recirculates through the bulk diode of Q3 and through Q2 (kept conductive) facilitating, that is, zero-voltage switching of Q3, even in conditions of reduced load.

Similar considerations apply as regards turning-on of the switch Q2 and turning-off of the switch Q3 (instants t1 and t4 of the diagram of Figure 4). Whereas the foregoing description refers for simplicity of illustration to an example of embodiment in which said events intervene simultaneously, in various embodiments it is possible to activate the switch Q2 and de-activate the switch Q3 when the voltage on the switch Q2 has reached zero, by causing the de-activation of the switch Q3 to follow the activation of the switch Q2 (with the operating sequence that proceeds according to the same modalities considered above). This operating mode enables possible reduction of the operating frequency of the converter, without this jeopardizing the characteristics of zero-voltage switching.

The above embodiments, which are such as to lead to temporal offset between turning-off of Q2 and turning-off of Q1 or else temporal offset between de-activation of the switch Q3 and activation of the switch Q2 can be used both individually and in combination for optimizing efficiency of conversion and regulating the operating frequency without adversely affecting operation of the converter and zero-voltage (ZV) transitions.

## Claims

1. A converter circuit to produce a dc output signal (OS) from a stabilized input voltage (Vs), the converter circuit including a flyback inductor (22) and a drive arrangement to drive said flyback inductor (22), the drive arrangement including a bridge structure with a first (34, Q2) and a second (Q1,Q3) branch fed from a bus line to receive said input voltage (Vs) and having respective intermediate points (A, B) to drive the terminals of said flyback inductor (22), wherein:
- said first branch (34, Q2) includes a diode (34) interposed between said bus line and the intermediate point (A) of said first branch as well as a first electronic switch (Q2) acting between the intermediate point (A) of said first branch and ground,
- said second branch (Q1,Q3) includes a second electronic switch (Q1) acting between said bus line and the intermediate point (B) of said second branch and a third electronic switch (Q3) acting between the intermediate point (B) of said second branch and ground, and
- a control unit (1000) is provided sensitive (36, 38) to the demagnetisation of said flyback inductor (22), said control unit (1000) configured to act (100, 200, 300) on said first (Q2), second (Q1) and third (Q3) switches to effect in a cyclical manner a driving sequence,
**characterized in that** said driving sequence includes:
- a) producing a ramp-like increase of a magnetising current in said flyback inductor (22) following activation of said first switch (Q2) and said second (Q1) switch;
- b) de-activating said first (Q2) and second (Q1) switch when the magnetising current in said flyback inductor (22) reaches a predetermined peak value, and
- c) activating said third switch (Q3) thus producing energy transfer in said flyback inductor (22), and
- d) activating said first switch (Q2) and de-activating said third switch (Q3) when the voltage on said first electronic switch (Q2) has reached zero.

2. The converter circuit of claim 1, wherein said control unit (1000) is configured to activate said second switch (Q1) with a given delay (DT1) with respect to activation of said first switch (Q2).

3. The converter circuit of either of claims 1 or 2, wherein said control unit (1000) is configured to activate said third switch (Q3) with a respective given delay (DT2) with respect to the de-activation of said first (Q2) and said second (Q1) switch.

4. The converter circuit of any of the preceding claims, wherein said first (Q2) and third (Q3) switches have associated capacitances (C1, C2) and wherein said control unit (1000) is configured to permit the magnetising inductance of said flyback inductor (22) to resonate with said capacitances (C1, C2), between the activation and the de-activation of said third switch (Q3), whereby the voltage on said first switch (Q2) swings back to zero, while said magnetising current in said flyback inductor (22) changes sign.

5. The converter circuit of Claim 4, wherein the capacitance (C1) associated with said first switch (Q2) is larger than the capacitance (C2) associated with said third switch (Q3).

6. The converter circuit of any of the previous claims, including at least one of:
- a first sensor (36) coupled to said flyback inductor (22) to detect demagnetization of said flyback inductor (22),
- a second sensor (38) coupled to said first electronic switch (Q2) to detect the current on said first electronic switch (Q2).

7. The converter circuit of any of the previous claims, coupled with a light source, such as a LED module, fed with said dc output signal (OS).

8. The converter circuit of any of the previous claims, wherein said control unit (1000) is configured to de-activate said first (Q2) and second (Q1) switch when the magnetising current in said flyback inductor (22) reaches a predetermined peak value, by simultaneous de-activation or with de-activation of said first switch (Q2) following de-activation of said second switch (Q1).

9. The converter circuit of any of the previous claims, wherein said control unit (1000) is configured to activate said first switch (Q2) and de-activate said third switch (Q3) when the voltage on said first electronic switch (Q2) has reached zero by simultaneous activation/deactivation or with de-activation of said third switch (Q3) following activation of said first switch (Q2).

10. A method of producing a dc output signal (OS) from a stabilized input voltage (Vs) via a flyback inductor (22) driven by a bridge structure with a first branch (34, Q2) and a second branch (Q1, Q3) fed with said input voltage (Vs) and having respective intermediate points (A, B) to drive the terminals of said fly back inductor (22), wherein:
- said first branch (34, Q2) includes a diode (34) interposed between said input voltage (Vs) and the intermediate point (A) of said first branch as well as a first electronic switch (Q2) acting between the intermediate point (A) of said first branch and ground,
- said second branch (Q1, Q3) includes a second electronic switch (Q1) acting between said input voltage (Vs) and the intermediate point (B) of said second branch,
- a third electronic switch (Q3) is provided acting between the intermediate point (B) of said second branch and ground, and
- a driving sequence is effected in a cyclical manner,
**characterized in that** said driving sequence includes:
- a) producing a ramp-like increase of a magnetising current in said flyback inductor (22) following activation of said first switch (Q2) and second (Q1) switch;
- b) de-activating said first (Q2) and second (Q1) switch when the magnetising current in said flyback inductor (22) reaches a predetermined peak value,
- c) activating said third switch (Q3) thus producing energy transfer in said flyback inductor (22), and
- d) activating said first switch (Q2) and de-activating said third switch (Q3) when the voltage on said first electronic switch (Q2) has reached zero.

## Patentansprüche

1. Wandlerschaltung zum Erzeugen eines
Gleichspannungsausgabesignals (OS) von einer stabilisierten Eingangsspannung (Vs), wobei die Wandlerschaltung einen Sperrwandler (22) und eine Treiberanordnung aufweist, um den Sperrwandler (22) zu treiben, wobei die Treiberanordnung, die eine Brückenstruktur mit einem ersten (34, Q2) und einem zweiten (Q1, Q3) Zweig enthält, der von einer Busleitung gespeist wird, um die Eingangsspannung (Vs) zu empfangen, und die jeweilige Zwischenpunkte (A, B) aufweist, um die Anschlüsse des Sperrwandlers (22) zu treiben, wobei:
der erste Zweig (34, Q2) eine Diode (34) enthält, die zwischen der Busleitung und dem Zwischenpunkt (A) des ersten Zweigs angeordnet ist, sowie einen ersten elektronischen Schalter (Q2), der zwischen dem Zwischenpunkt (A) des ersten Zweigs und
Masse agiert,
der zweite Zweig (Q1, Q3) einen zweiten elektronischen Schalter (Q1) enthält, der zwischen der Busleitung und dem Zwischenpunkt (B) des zweiten Zweiges agiert, und einen dritten elektronischen Schalter (Q3), der zwischen dem Zwischenpunkt (B) des zweiten Zweiges und Masse agiert, und
eine Steuereinheit (1000) (36, 38) für die Entmagnetisierung des Sperrwandlers (22) empfindlich bereitgestellt wird, wobei die Steuereinheit (1000) eingerichtet ist zum Agieren (100, 200, 300) auf den ersten (Q2), den zweiten (Q1) und den dritten (Q3) Schalter, um in einer zyklischen Weise eine Treibersequenz zu bewirken,
**dadurch gekennzeichnet, dass** die Treibersequenz aufweist:
a) Erzeugen einer rampenartigen Erhöhung eines Magnetisierungsstroms in dem Sperrwandler (22), die eine Aktivierung des ersten Schalters (Q2) und des zweiten Schalters (Q1) folgt;
b) Deaktivieren des ersten (Q2) und zweiten (Q1) Schalters, wenn der Magnetisierungsstrom in dem Sperrwandler (22) einen vorbestimmten Spitzenwert erreicht, und
c) Aktivieren des dritten Schalters (Q3), wodurch eine Energieübertragung in dem Sperrwandler (22) erzeugt wird, und
d) Aktivieren des ersten Schalters (Q2) und Deaktivieren des dritten Schalters (Q3), wenn die Spannung an dem ersten elektronischen Schalter (Q2) Null erreicht hat.

2. Wandlerschaltung nach Anspruch 1, wobei die Steuereinheit (1000) eingerichtet ist, um den zweiten Schalter (Q1) mit einer gegebenen Verzögerung (DT1) mit Bezug einer Aktivierung des ersten Schalters (Q2) zu aktivieren.

3. Wandlerschaltung nach entweder Anspruch 1 oder 2, wobei die Steuereinheit (1000) eingerichtet ist, um den dritten Schalter (Q3) mit einer jeweiligen gegebenen Verzögerung (DT2) mit Bezug auf die Deaktivierung des ersten (Q2) und zweiten (Q1) Schalters zu aktivieren.

4. Wandlerschaltung nach irgend einem der vorhergehenden Ansprüche, wobei der erste (Q2) und der dritte (Q3) Schalter assoziierte Kapazitäten (C1, C2) haben, und wobei die Steuereinheit (1000) eingerichtet ist, um der Magnetisierungsinduktivität des Sperrwandlers (22) zu erlauben, zwischen der Aktivierung und der Deaktivierung des dritten Schalters (Q3), mit den Kapazitäten (C1, C2) in Resonanz zu treten, wobei die Spannung an dem ersten Schalter (Q2) auf Null zurück schwingt, während der Magnetisierungsstrom in dem Sperrwandler (22) sein Vorzeichen ändert.

5. Wandlerschaltung nach Anspruch 4, wobei die Kapazität (C1), die mit dem ersten Schalter (Q2) assoziiert ist, größer ist als die Kapazität (C2), die mit dem dritten Schalter (Q3) assoziiert ist.

6. Wandlerschaltung nach irgend einem der vorhergehenden Ansprüche, die zumindest einen davon aufweist:
einen ersten Sensor (36), der mit dem Sperrwandler (22) gekoppelt ist, um eine Entmagnetisierung des Sperrwandlers (22) zu detektieren,
einen zweiten Sensor (38), der mit dem ersten elektronischen Schalter (Q2) gekoppelt ist, um den Strom an dem ersten elektronischen Schalter (Q2) zu detektieren.

7. Wandlerschaltung nach irgend einem der vorhergehenden Ansprüche, die mit einer Lichtquelle gekoppelt ist, wie zum Beispiel ein LED-Modul, die von dem Gleichspannungsausgabesignal (OS) gespeist wird.

8. Wandlerschaltung nach irgend einem der vorhergehenden Ansprüche, wobei die Steuereinheit (1000) eingerichtet ist, um den ersten (Q2) und den zweiten (Q1) Schalter zu deaktivieren, wenn der Magnetisierungsstrom in dem Sperrwandler (22) einen vorbestimmten Spitzenwert erreicht, durch simultanes Deaktivieren oder mit Deaktivierung des ersten Schalters (Q2), die einem Deaktivieren des zweiten Schalters (Q1) folgt.

9. Wandlerschaltung nach irgend einem der vorhergehenden Ansprüche, wobei die Steuereinheit (1000) eingerichtet ist, um den ersten Schalter (Q2) zu aktivieren und den dritten Schalter (Q3) zu deaktivieren, wenn die Spannung an dem ersten elektronischen Schalter (Q2) Null erreicht hat, durch simultane Aktivierung/Deaktivierung oder mit Deaktivierung des dritten Schalters (Q3), die einer Aktivierung des ersten Schalters (Q2) folgt.

10. Verfahren zum Erzeugen eines Gleichspannungsausgabesignals (OS) von einer stabilisierten Eingangsspannung (Vs) durch einen Sperrwandler (22), der durch eine Brückenstruktur mit einem ersten Zweig (34, Q2) und einem zweiten Zweig (Q1, Q3), der von der Eingangsspannung (Vs) gespeist wird, getrieben wird, und die jeweilige Zwischenpunkte (A, B) aufweist, um die Anschlüsse des Sperrwandlers (22) zu treiben, wobei:
der erste Zweig (34, Q2) eine Diode (34) enthält, die zwischen der Eingangsspannung (Vs) und dem Zwischenpunkt (A) des ersten Zweigs angeordnet ist, sowie einen ersten elektronischen Schalter (Q2), der zwischen dem Zwischenpunkt (A) des ersten Zweigs und
Masse agiert,
der zweite Zweig (Q1, Q3) einen zweiten elektronischen Schalter (Q1 enthält), der zwischen der Eingangsspannung (Vs) und dem Zwischenpunkt (B) des zweiten Zweiges agiert,
ein dritter elektronischer Schalter (Q3) bereitgestellt wird, der zwischen dem Zwischenpunkt (B) des zweiten Zweiges und Masse agiert, und
eine Treibersequenz in einer zyklischen Weise bewirkt wird, **dadurch gekennzeichnet, dass** die Treibersequenz aufweist:
a) Erzeugen einer rampenartigen Erhöhung eines Magnetisierungsstroms in dem Sperrwandler (22), die einer Aktivierung des ersten Schalters (Q2) und des zweiten Schalters (Q1) folgt;
b) Deaktivieren des ersten (Q2) und zweiten (Q1) Schalters, wenn der Magnetisierungsstrom in dem Sperrwandler (22) einen vorbestimmten Spitzenwert erreicht,
c) Aktivieren des dritten Schalters (Q3), wodurch eine Energieübertragung in dem Sperrwandler (22) erzeugt wird, und
d) Aktivieren des ersten Schalters (Q2) und Deaktivieren des dritten Schalters (Q3), wenn die Spannung an dem ersten elektronischen Schalter (Q2) Null erreicht hat.

## Revendications

1. Un circuit convertisseur pour produire un signal de sortie en courant continu (OS) à partir d'une tension d'entrée stabilisée (Vs), le circuit convertisseur comprenant une inductance flyback (22) et une configuration de pilotage pour piloter ladite inductance flyback (22), la configuration de pilotage comprenant une structure en pont avec une première (34, Q2) et une seconde (Q1, Q3) branche alimentées à partir d'une ligne bus pour recevoir ladite tension d'entrée (Vs) et possédant des points intermédiaires respectifs (A, B) pour piloter les bornes de ladite inductance flyback (22), dans lequel :
- ladite première branche (34, Q2) comprend une diode (34) intercalée entre ladite ligne bus et le point intermédiaire (A) de ladite première branche ainsi qu'un premier commutateur électronique (Q2) opérant entre le point intermédiaire (A) de ladite première branche et la masse,
- ladite seconde branche (Q1, Q3) comprend un second commutateur électronique (Q1) opérant entre ladite ligne bus et le point intermédiaire (B) de ladite seconde branche et un troisième commutateur électronique (Q3) opérant entre le point intermédiaire (B) de ladite seconde branche et la masse, et
- il est prévu une unité de contrôle (1000) sensible (36, 38) à la démagnétisation de ladite inductance flyback (22), ladite unité de contrôle (1000) étant configurée pour opérer (100, 200, 300) sur lesdits premier (Q2), second (Q1) et troisième (Q3) commutateurs pour exécuter de manière cyclique une séquence de pilotage, **caractérisé en ce que** ladite séquence de pilotage comprend :
a) la production d'une augmentation de type rampe d'un courant de magnétisation dans ladite inductance fly-back (22) après activation dudit premier commutateur (Q2) et dudit second commutateur (Q1) ;
b) la désactivation desdits premier (Q2) et second (Q1) commutateurs lorsque le courant de magnétisation dans ladite inductance flyback (22) atteint une valeur de crête prédéterminée, et
c) l'activation dudit troisième commutateur (Q3) pour produire ainsi un transfert d'énergie dans ladite inductance flyback (22), et
d) l'activation dudit premier commutateur (Q2) et la désactivation dudit troisième commutateur (Q3) lorsque la tension sur ledit premier commutateur électronique (Q2) a atteint zéro.

2. Le circuit convertisseur de la revendication 1, dans lequel ladite unité de contrôle (1000) est configurée pour activer ledit second commutateur (Q1) avec un retard donné (DT1) par rapport à l'activation dudit premier commutateur (Q2).

3. Le circuit convertisseur de l'une ou l'autre des revendications 1 ou 2, dans lequel ladite unité de contrôle (1000) est configurée pour activer ledit troisième commutateur (Q3) avec un retard donné respectif (DT2) par rapport à la désactivation desdits premier (Q2) et second (Q1) commutateurs.

4. Le circuit convertisseur de l'une des revendications précédentes, dans lequel lesdits premier (Q2) et troisième (Q3) commutateurs possèdent des capacités associées (C1, C2) et dans lequel ladite unité de contrôle (1000) est configurée pour permettre à l'inductance de magnétisation de ladite inductance flyback (22) de résonner avec lesdites capacités (C1, C2), entre l'activation et la désactivation dudit troisième commutateur (Q3), de sorte que la tension sur ledit premier commutateur (Q2) rebascule vers zéro, pendant que ledit courant de magnétisation dans ladite inductance flyback (22) change de signe.

5. Le circuit convertisseur de la revendication 4, dans lequel la capacité (C1) associée audit premier commutateur (Q2) est supérieure à la capacité (C2) associée audit troisième commutateur (Q3).

6. Le circuit convertisseur de l'une des revendications précédentes, comprenant au moins l'un d'entre :
- un premier capteur (36) couplé à ladite inductance flyback (22) pour détecter la démagnétisation de ladite inductance flyback (22),
- un second capteur (38) couplé audit premier commutateur électronique (Q2) pour détecter le courant sur ledit premier commutateur électronique (Q2).

7. Le circuit convertisseur de l'une des revendications précédentes, couplé à une source lumineuse, telle qu'un module LED, alimentée par ledit signal de sortie en courant continu (OS).

8. Le circuit convertisseur de l'une des revendications précédentes, dans lequel ladite unité de contrôle (1000) est configurée pour désactiver lesdits premier (Q1) et second (Q2) commutateurs lorsque le courant de magnétisation dans ladite inductance flyback (22) atteint une valeur de crête prédéterminée, par désactivation simultanée ou avec désactivation dudit premier commutateur (Q2) après désactivation dudit second commutateur (Q1).

9. Le circuit convertisseur de l'une ou l'autre des revendications précédentes, dans lequel ladite unité de contrôle (1000) est configurée pour activer ledit premier commutateur (Q2) et désactiver ledit troisième commutateur (Q3) lorsque la tension sur ledit premier commutateur électronique (Q2) a atteint zéro par activation/désactivation simultanée ou avec désactivation dudit troisième commutateur (Q3) après activation dudit premier commutateur (Q2).

10. Un procédé pour produire un signal de sortie en courant continu (OS) à partir d'une tension d'entrée stabilisée (Vs) via une inductance flyback (22) pilotée par une structure en pont avec une première branche (34, Q2) et une seconde branche (Q1, Q3), alimentée par ladite tension d'entrée (Vs) et possédant des points intermédiaires respectifs (A, B) pour piloter les bornes de ladite inductance flyback (22), dans lequel :
- ladite première branche (34) Q2) comprend une diode (34) intercalée entre ladite tension d'entrée (Vs) et le point intermédiaire (A) de ladite première branche ainsi qu'un premier commutateur électronique (Q2) opérant entre le point intermédiaire (A) de ladite première branche et la masse,
- ladite seconde branche (Q1, Q3) comprend un second commutateur électronique (Q1) opérant entre ladite tension d'entrée (Vs) et le point intermédiaire (B) de ladite seconde branche,
- il est prévu un troisième commutateur électronique (Q3) opérant entre le point intermédiaire (B) de ladite seconde branche et la masse, et
- une séquence de pilotage est exécutée de manière cyclique,
**caractérisé en ce que** ladite séquence de pilotage comprend :
a) la production d'une augmentation de type rampe d'un courant de magnétisation dans ladite inductance flyback (22) après activation dudit premier commutateur (Q2) et dudit second commutateur (Q1) ;
b) la désactivation desdits premier (Q2) et second (Q1) commutateurs lorsque le courant de magnétisation dans ladite inductance flyback (22) atteint une valeur de crête prédéterminée, et
c) l'activation dudit troisième commutateur (Q3) pour produire ainsi un transfert d'énergie dans ladite inductance flyback (22), et
d) l'activation dudit premier commutateur (Q2) et la désactivation dudit troisième commutateur (Q3) lorsque la tension sur ledit premier commutateur électronique (Q2) a atteint zéro.
